# EUROPEAN PATENT APPLICATION

(11) **EP 1 185 058 A2**
(43) Date of publication of application: **06.03.2002**
(21) Application number: 01118553.5
(22) Date of filing: 01.08.2001
(51) Int. Cl.: H04M 1/725

(54) **Method and apparatus for detecting user accessibility on a mobile communication device**

(30) Priority: 31.08.2000 US 653191
(71) Applicant: MICROSOFT CORPORATION, Redmond, WA 98052 (US)
(72) Inventor: Taylor, Matthew W., North Bend, WA 98045 (US); Ferrell, John Ian, Bellevue, WA 98005 (US); Shell, Scott R., Redmond, WA 98052 (US); Verthein, William G., Issaquah, WA 98027 (US)
(74) Representative: Grünecker, Kinkeldey, Stockmair & Schwanhäusser Anwaltssozietät

(57) **Abstract**

A mobile communication device having at least one sensor for detecting when the user is in possession of or located proximate to the mobile communication device. The detection signal output by the sensor may be used to determine when the user is accessible on a client application running on the mobile communication device.

## Description

### TECHNICAL FIELD

The present invention relates to communication between clients on a network system. More particularly, the present invention is directed to a method and apparatus for detecting and tracking the accessibility of user on a network system via a mobile communication device.

### BACKGROUND OF THE INVENTION

In today's world, computers and computer-related technology affect virtually every aspect of our lives. With the advent of commercial service providers such as Microsoft® Network, the interconnection and communication between computers is available for home use as well as for business use. Computer networks are not only used to facilitate the exchange of information, they are also used to facilitate communication between the users connected to the network by client devices.

A number of methods have been developed to facilitate communication over a computer network. Some of these methods include e-mail, chat rooms, and instant messaging. E-mail is the transmission of messages over a communications network. The messages can be notes entered from the keyboard or electronic files stored on disk. Sent messages are stored in electronic mailboxes until the recipient fetches them. Chat rooms provide real-time communication between users via computer. Once a chat has been initiated, users enter text by typing on a keyboard and the entered text appears on the other users' monitors. Most networks offer a chat feature. Instant messaging represents another type of communications service that enables a user to create a private chat room with another user. Usually, the instant messaging system alerts a user whenever somebody on the user's private list is online. The user can then initiate a chat session with the other user. Any one of these or other methods of communication over a network may be selected depending upon a user's preference and purpose.

In the communication networks that provide real-time or substantially real-time communication, a server is informed of the presence of a user on a client device connected to the network. More particularly, when a user connects or logs on to the network via a client device, such as a personal computer (PC), the server is notified. The server then stores the online status of the particular client device in a log. Other client devices connected to the network are aware of the online status of the particular client device because the server has been notified that the particular client device is online.

The online status of a client device may be updated to indicate that the user of the client device is still online and is currently available or present on the client device. For example, the status of a user of a client device may be updated upon the occurrence of a keyboard event or a mouse/trackball event. That is, keystrokes on a keyboard and/or movement of a mouse/trackball connected to a client device are detected, and a corresponding signal is supplied to the server to notify or update the server on the status of the client device. The systems may also be configured to include a server that polls the status of all of the client devices connected to the network to determine their status. In this manner, other users on the network are aware that the particular user is online and at the client device so that the particular user is available to receive and respond to a communication.

The foregoing techniques for detecting the presence and accessibility of a user on a client application of a client device on a network are usually sufficient for client devices requiring keystrokes and/or mouse/trackball movement during use. However, these techniques suffer from the following disadvantages.

Many people today carry a mobile communication device such as a mobile phone, handheld PC, or a personal digital assistant (PDA), for example. Often, these devices represent the best way to contact the user. However, these types of mobile communication devices do not necessarily require keyboard use or mouse/trackball movement during use. That is, a user may be relying on a mobile communication device as a means of accessibility for communication, even when the user is not actively using a keypad or mouse/trackball or other input that may be associated with the device. The foregoing techniques related to detecting a user's presence via keyboard or mouse/trackball use do not accurately detect the presence and accessibility of a user with relation to a mobile communication device.

Therefore, a mobile communication device for connection to a communication network is needed that detects when a user is accessible on a client application via the mobile communication device. A mobile communication device that enables a server to maintain a log of whether the user is accessible on a client application via the mobile communication device is also needed.

### SUMMARY OF THE INVENTION

The foregoing deficiencies and limitations in the prior art are overcome by the present invention which provides a mobile communication device having at least one sensor that detects when the user is accessible via the mobile communication device. The mobile communication device according to the present invention includes at least one sensor for detecting when the user is carrying the device, handling the device or when the mobile device is located proximate the user.

According to another aspect of the present invention, the mobile communication device may be arranged to store information concerning the accessibility of the user. The mobile communication device may further be arranged to report the user accessibility information to a tracking system on the network.

The mobile communication device according to the present invention enables a user to connect to a network and communicate with other users on the network via any appropriate communication method such as those noted above.

These and other objects and features of the present invention will be apparent upon consideration of the following detailed description of preferred embodiments thereof, presented in connection with the following drawings in which like reference numerals identify like elements throughout.

### BRIEF DESCRIPTION OF THE DRAWINGS

Figure 1 is a block diagram representing an exemplary communications network into which the present invention may be incorporated;
Figure 2 is a block diagram representing an exemplary mobile communication device according to the present invention;
Figure 3 is a flow diagram illustrating the steps performed by the method according to an aspect of the present invention;
Figure 4 is a flow diagram illustrating the steps performed by, the method according to the present invention when an attempt to access the mobile communication device is detected;
Figure 5 is a flow diagram illustrating the steps performed according to the present invention when a user wishes to store preference data in the mobile communication device;
Figure 6 is a flow diagram illustrating the steps performed by the method according to another aspect of the present invention when an attempt to access the mobile communication device is detected;
Figure 7 is a flow diagram illustrating the steps performed by the method according to another aspect of the present invention when an attempt to access the mobile communication device is detected; and
Figure 8 is a flow diagram illustrating the steps performed by the method according to the present invention for reporting the status of the user accessibility information to a tracking system on the network.

### DETAILED DESCRIPTION OF THE INVENTION

The term "presence" is often used to describe whether a user on a network is online or offline. Signals detected in response to keystrokes or mouse/trackball movement are considered to represent the "presence" of a user on a client application of a client device on a network. The term "accessible" as defined and used herein means that the user of a client application on a mobile communication device is online and available for communication via the mobile communication device. For example, a user would be considered to be accessible if the user is online and carrying (e.g., carrying in hand, in pocket, purse, belt, etc.), holding, or handling the mobile communication device or if the user is located near or proximate to the mobile communication device. An "accessibility event" as defined and used herein means detection of a signal from any one or a number of sensors arranged in the mobile communication device to detect when the user is carrying, holding, or handling the device or when the user is located near or proximate the mobile communication device.

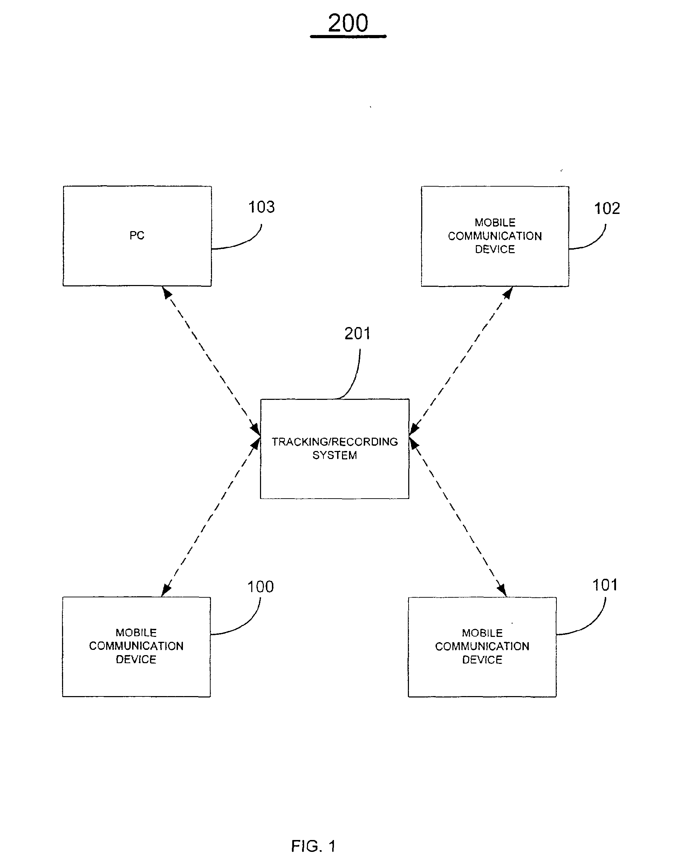

Referring to Fig. 1, mobile communication devices 100, 101 and 102 may be used to gain access to a communication network 200, including a tracking and recording system 201. The communication network 200 as discussed herein will be understood to include any computing, multimedia, or video system that a user can access. For example, the communication network 200 may include the Internet, e-mail systems, online services, dial-up computer services, wide area networks, and so on. The mobile communication devices 100, 101, and 102 according to the present invention may include portable PCs, handheld PCs, mobile telephones, PDAs, and so forth that are arranged to gain access to the communication network 200.

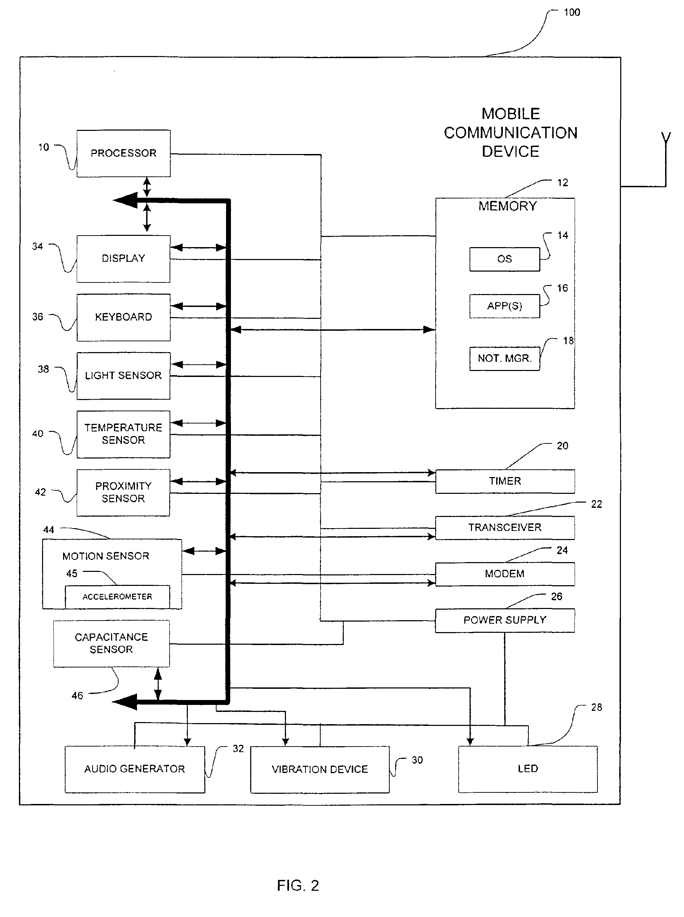

Fig. 2 illustrates an example of the functional components of the mobile communication device 100 according to the present invention. The mobile communication device includes a processor 10, a memory 12, a display 34, and a keyboard 36. The memory 12 may include both volatile memory or RAM and non-volatile memory or ROM, for example. The memory 12 stores user accessibility information as well as other data. An operating system 14 is resident in the memory 12 and executes on the processor 10. The mobile communication device 100 includes an operating system such as the Windows® CE operating system from Microsoft Corporation or other operating systems as are known in the art (including, but not limited to, Palm OS by Palm Computing Inc.).

One or more application programs 16 are loaded into memory 12 and run on the operating system 14. Examples of applications include e-mail programs, scheduling programs, spreadsheet programs, Internet browser programs, and so forth. The mobile communication device 100 also has a notification manager 18 loaded in memory 12, which executes on the processor 10. The notification manager 18 handles notification requests from the applications 16.

The mobile communication device 100 has a power supply 26, which is implemented as one or more batteries. The power supply 26 may further include an external power source that overrides or recharges the built-in batteries, such as an AC adapter or a powered docking cradle.

A transceiver 22 is also provided for transmitting and receiving signals. The mobile communication device also includes a modem 24 for dial up connection to the network 200.

The mobile communication device 100 is also shown with three types of external notification mechanisms: an LED 28, a vibration device 30, and an audio generator 32. These devices are directly coupled to the power supply 26 so that when activated, they remain ON for a duration dictated by the notification manager even though the mobile device processor 10 and other components might shut down to conserve battery power. The LED 28 preferably remains on indefinitely until the user takes action. The current versions of the vibration device 30 and audio generator 32 use too much power for today's mobile client device batteries, and so they are configured to turn OFF when the rest of the system does or at some finite duration after activation. While three notification mechanisms are shown, it is understood that the mobile communication device may be configured to include any one or more appropriate notification mechanisms as are known in the art.

Mobile communication devices are usually physically carried by a user either in a bag or briefcase, attached to a belt or jacket, etc., or arranged proximate the user either on a table or chair, etc. Therefore, the mobile communication device 100 according to the present invention further includes at least one of the sensors 38-46. These sensors are provided to detect when the user is accessible via the mobile communication device 100. It is noted that a number of sensors are described. It is appreciated that the system may include any one of the sensors to minimize manufacturing costs of the mobile communication device. Any combination of the sensors or additional sensors may be used. For example, the light sensor 38 may include a photodetector for detecting a change in light intensity indicating when the user is carrying or handling the mobile communication device. The temperature sensor 40 may include a thermister, for example, to detect a change in temperature resulting when the user handles the mobile communication device 100. The proximity sensor 42, may include an infrared sensor, for example, to detect the presence of the user nearby the mobile communication device 100. The proximity sensor 42 may be implemented with an audio detector that detects a change in ambient noise. The motion sensor 44 may detect motion of the user indicating that the user is carrying the mobile communication device 100. Similarly, the capacitance sensor 46 may detect a change in capacitance due to handling of the mobile communication device 100 by the user or the mobile communication device 100 being close to the user (e.g., on a belt hook or in a shirt pocket). Other suitable sensors may be used to detect when the user is carrying, holding or otherwise handling the mobile client device 100 or when the mobile communication device is located proximate the user.

A timer 20 may also be provided, as shown in Fig. 2, to detect a period of time during which the mobile communication device has not been used and does not appear to be with or near the user. The timer 20 may be provided to assist in determining the accessibility of the user. More particularly, when the time period of the timer elapses without the occurrence of an accessibility event, then the user may be considered "offline" and not accessible. Therefore, once the time on the timer 20 runs out, the processor 10 may update the user accessibility information stored in memory 12 to indicate that the user is offline. The time period of the timer 20 may be adjustable by the user.

When at least one of the sensors 38-46 is activated, a detection signal is supplied to the processor 10. If necessary, the processor 10 then processes the signal to determine whether the signal represents actual accessibility of the user. When the processor 10 determines that the detection signal indicates that the user is accessible, it updates the user accessibility information stored in memory 12 to indicate that the user is accessible on the mobile communication device 100.

A specific example of the present invention will be discussed where a detection signal is output by the motion detector 44 of the mobile communication device 100. The motion sensor 44 in this example is implemented by an accelerometer 45, as shown in Fig. 2.

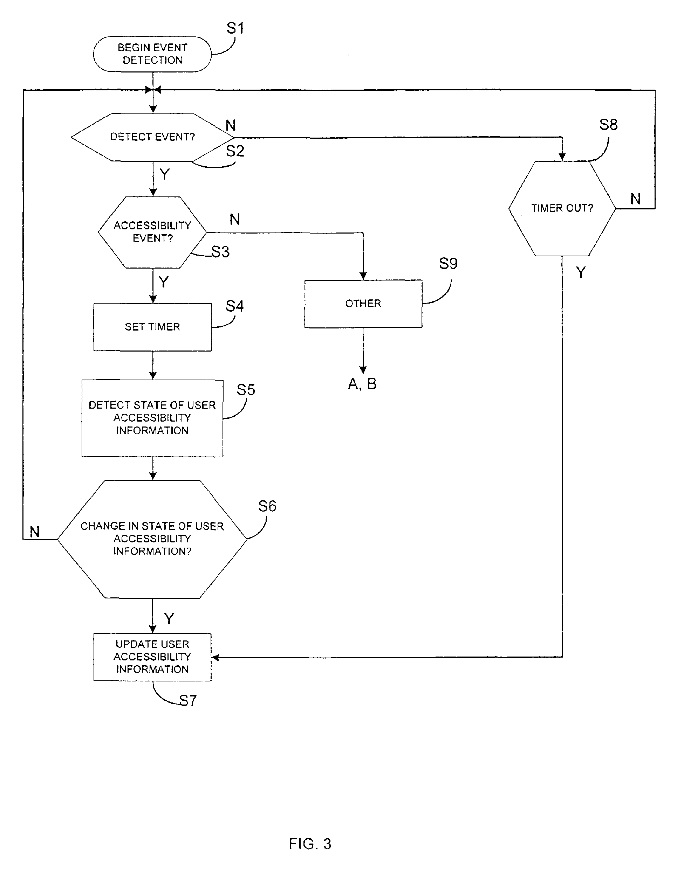

A user activates the mobile communication device 100 and connects to the network 200 via modem 24. The mobile communication device 100 is then considered online. The processor 10 updates the user accessibility information to indicate an online status. When the user begins handling and carrying the mobile communication device 100, the accelerometer 45 detects movement of the mobile communication device 100. Referring to Fig. 3, an event detection process begins in step S1. The accelerometer 45 detects movement of the mobile communication device 100 and outputs a detection signal to the processor 10 in step S2. The processor 10 determines whether the event corresponds to an accessibility event in step S3. More particularly, the processor 10 may detect different types of events. For example, the processor 10 may detect an access attempt representing an attempt by another user on the network to contact the particular user via the mobile communication device. It will be appreciated that other events may be detected depending upon the use of the mobile communication device. An accessibility event is triggered by output signals from any one or more of the sensors 38-46. In the present example, the output signal from the accelerometer 45 represents an accessibility event. Therefore, the answer in step S3 is Yes. In step S4, the timer 20 in the mobile communication device 100 is set to a predetermined time interval. The time interval may be set in the mobile client device upon manufacture or may be adjusted and set by the user as desired. In step S5, the state of previously stored user accessibility information is detected. In step S6, the processor 10 determines whether the current user accessibility information is different from the previously stored state and whether the user accessibility information should be updated to indicate that the user of the mobile communication device 100 is accessible via the mobile device 100. In the present example, the answer in step S6 is Yes. Therefore, in step S7, the processor 10 updates the user accessibility information stored in memory 12.

When the answer in step S2 is No, step S8 is performed to determine whether the time previously set in the timer 20 has run out. If the answer in step S8 is Yes, then step S7 is performed to update the status of the user accessibility information to indicate an offline state representing that the user is no longer accessible. If the answer in step S8 is No, then the process returns to step S2. When the an swer in step S3 is No, it is determined that some other event has been detected in step S9, such as an accessibility attempt event, and processing for the particular event begins. The other events are discussed in detail below. When the answer in step S6 is No, indicating no change in the user accessibility information, processing returns to step S2.

In step S2, the processor 10 may run an algorithm to determine whether the detection signal from the sensor actually represents accessibility of the user. For example, with respect to the accelerometer 45, the processor 10 compares the signal output from the accelerometer 45 with a predetermined threshold value. The threshold value may be set upon manufacture or set and adjusted by the user. The use of threshold values provides a type of filtering to eliminate erroneous determination of accessibility by screening the signals output by the sensors. In the current example, the threshold value is used to eliminate random movement that does not correspond to movement associated with a user carrying or handling the mobile communication device. Therefore, the processor 10 determines that the signal from the accelerometer 45 represents actual movement of the mobile communication device 100 by a user when the signal level exceeds the predetermined threshold level. Similar processing may be performed as necessary when a detection signal is output by any one or more of the other sensors 38-46.

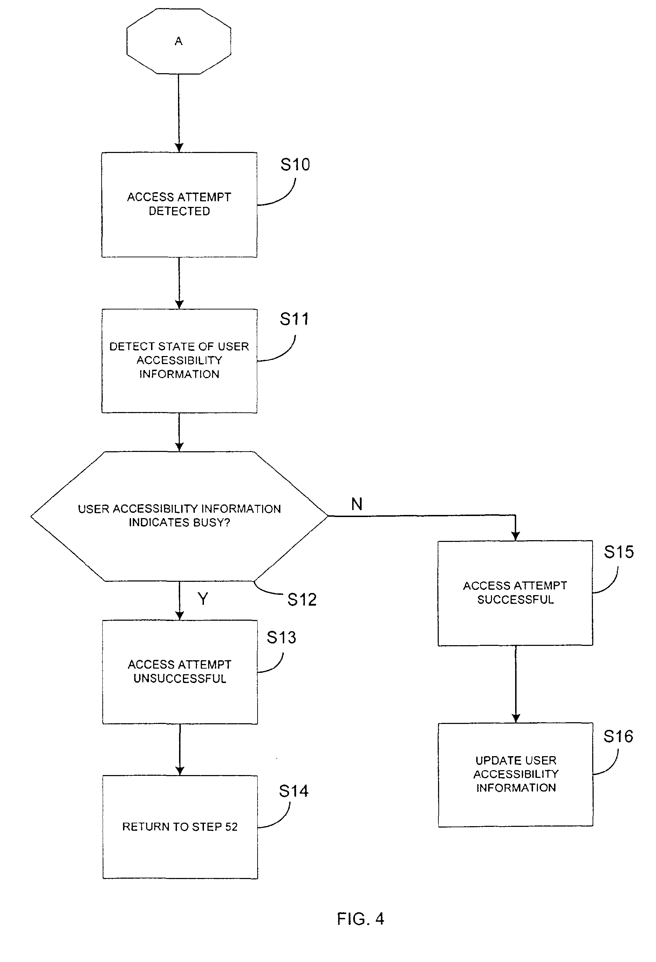

In step S9, another event that may be detected by the mobile communication device 100 is an access attempt when another user on the network is attempting to access the user via the mobile communication device 100. Referring to Fig. 4, an access attempt is detected in step S10. In step S11, the processor 10 detects the user accessibility information previously stored in memory 12 to determine the accessibility of the user. The processor 10 determines whether the accessibility information indicates that the user is busy, receiving a call or data, for example, in step S12. If the answer in step S12 is Yes, the processor 10 determines that the access attempt is unsuccessful in step S13 and processing returns to step S2 in step S14. If the answer in step S12 is No, then the processor 10 determines in step S15 that the access attempt is successful and updates the user accessibility information in step S16 to indicate that the user is busy processing a successful access attempt.

In step S9, another possible event that may be detected by the mobile communication device is a change in user preference data. More particularly, a user may enter user preference data via the keyboard 36, which data is stored in memory 12. For example, the user may set the user preference data to indicate silent mode representing the fact that the user does not wish to be alerted to an access attempt. The processor 10, upon detection of the silent mode preference data, will not engage the notification mechanisms upon an access attempt. It is understood that the mobile communication device 100 may be arranged to store and respond to any useful preference data set by the user.

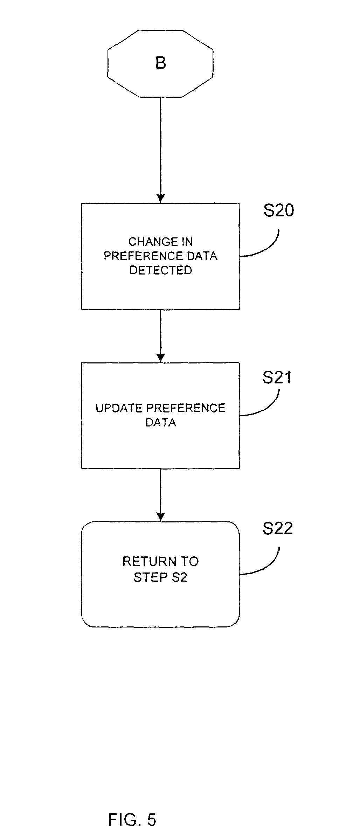

Referring to Fig. 5, a change in user preference data is detected in step S20. The processor 10 updates the user preference data stored in memory 12 in step S21. In step S22, processing then returns to step S2.

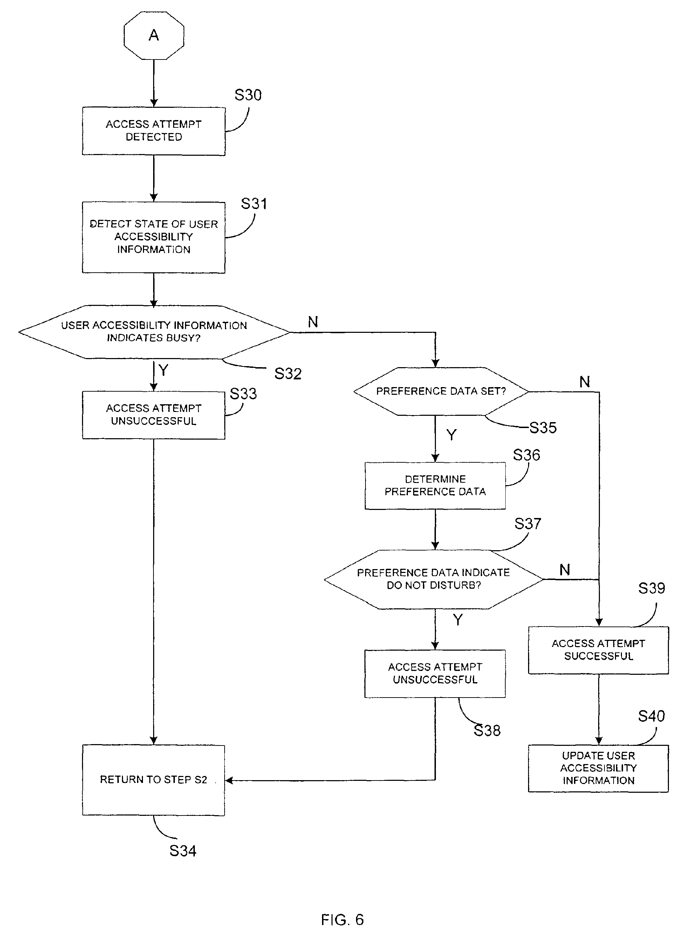

Fig. 6 illustrates the processing steps for an access attempt when user preference data is stored in memory 12. An access attempt is detected in step S30. In step S31, the processor 10 reads the user accessibility information stored in memory 12 to determine the accessibility of the user. The processor 10 determines whether the accessibility information indicates that the user is busy, receiving a call or data, for example, in step S32. If the answer in step S32 is Yes, the processor 10 determines that the access attempt is unsuccessful in step S33. In step S34, processing then returns to step S2. If the answer in step S32 is No, the processor 10 determines whether the user has set user preference data in step S35. If the answer in step S35 is Yes, then the processor 10 reads the user preference data in step S36. The processor 10 then determines whether the user preference data indicates that the user does not wish to be disturbed in step S37. If the answer in step S37 is Yes, then the processor 10 determines that the access attempt is unsuccessful in step S38, and processing returns to step S2 in step S34. If the answer in either of steps S35 or S37 is No, then the processor 10 determines that the access attempt is successful in step S39. In step S40, the processor 10 updates the user accessibility information to indicate that the user is busy processing a successful access attempt.

As noted above, the mobile communication device 100 may run a number of application programs, including a scheduling program. Program data is often stored in memory 12 in connection with these programs. For example, when a scheduling program is run on the device, the program data may include information as to when the user will be in a meeting. This data may be detected and used by the processor 10 to process an access attempt and/or to update the user accessibility information. Therefore, when processing an access attempt, the processor 10 may detect program data and/or user preference data in addition to the user accessibility information.

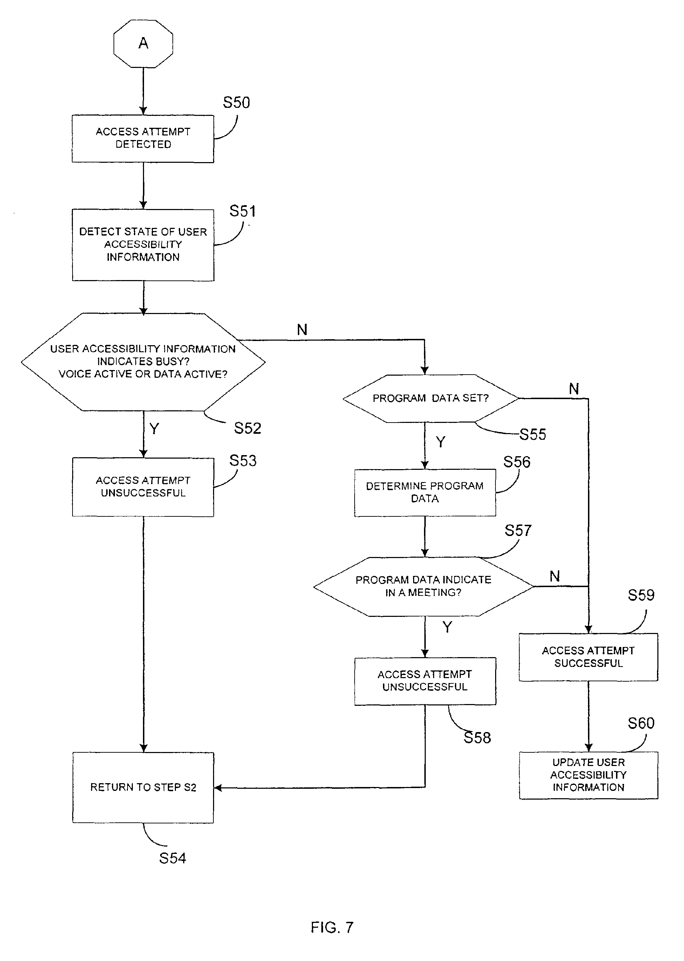

Referring to Fig. 7, an example of processing an access attempt considering program data is shown. An access attempt is detected in step S50. In step S51, the processor 10 reads the user accessibility information stored in memory 12 to determine the accessibility of the user. The processor 10 determines whether the accessibility information indicates that the user is busy, receiving a call or data, for example, in step S52. If the answer in step S52 is Yes, the processor 10 determines that the access attempt is unsuccessful in step S53. In step S54, processing returns to step S2. If the answer in step S52 is No, then the processor 10 determines whether program data is present in memory 12 in step S55. If the answer in step S55 is Yes, then the processor 10 reads the program data in step S56. The processor 10 then determines whether the program data indicates that the user is busy, in a meeting for example, in step S57. If the answer in step S57 is Yes, then the processor 10 determines that the access attempt is unsuccessful in step S58, and processing returns to step S2 in step S54. If the answer in either of steps S55 or S57 is No, then the processor 10 determines that the access attempt is successful in step S59. In step S60, the processor 10 updates the user accessibility information to indicate that the user is busy processing a successful access attempt.

In the examples described herein, instead of storing the user accessibility data and user preference data separately, the user accessibility information may be arranged to include multiple levels of granularity. More particularly, the user accessibility information may indicate the user status as online, silent mode or online, in meeting. The user accessibility information may include a status online, mobile, or online, accessible, indicating that the user is connected to the network and accessible via the mobile communication device. The user accessibility information may also include alternate contact information indicating the user's preference for communication at a given time. The status of the user may be indicated and stored in any suitable arrangement.

According to another aspect of the present invention, the user accessibility information may be reported to the tracking and recording system 201 on the network. More particularly, the processor 10 may be arranged to output a signal, indicating the status of the user accessibility information, to the tracking and recording system 201. The tracking and recording system 201 stores information concerning the status of users connected to the network. Alternatively, the tracking and recording system 201 may poll all of the client communication devices on the network, including the mobile communication device according to the present invention, to determine the status of the users associated with the communication devices.

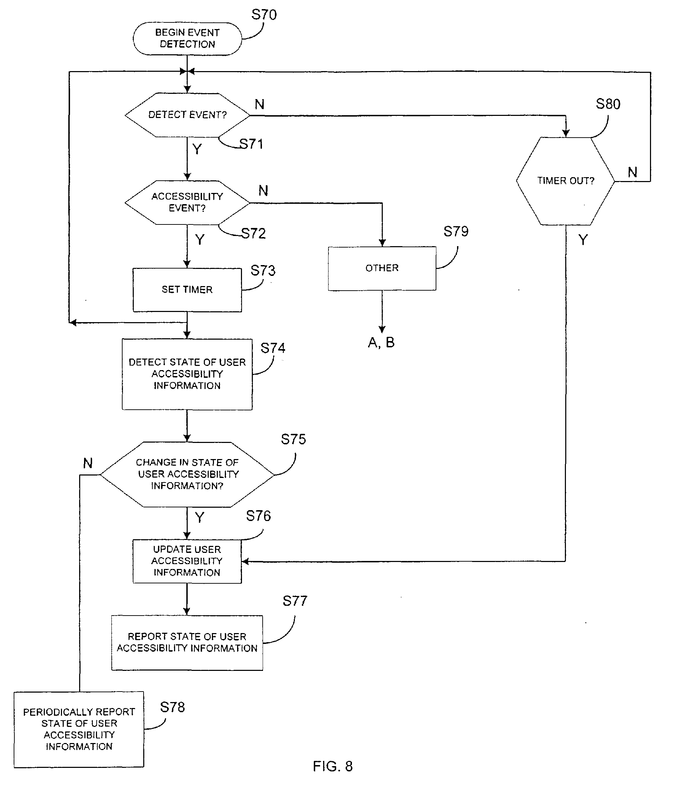

Referring to Fig. 8, an example of the steps performed when information is reported to the tracking and recording system 201 is shown. Continuing with the example of the accelerometer, when the user begins handling and carrying the mobile communication device 100, the accelerometer 45 detects movement of the mobile communication device 100. The accelerometer 45 detects movement of the mobile communication device 100 and outputs a detection signal to the processor 10 in step S71. The processor 10 determines whether the event corresponds to an accessibility event in step S72. In the present example, the output signal from the accelerometer 45 represents an accessibility event. Therefore, the answer in step S72 is Yes. In step S73, the timer 20 in the mobile communication device 100 is set to a predetermined time interval. In step S74, the user accessibility information stored in the memory 12 is read. In step S75, the processor 10 determines whether the user accessibility information should be updated to indicate that the user of the mobile communication device 100 is accessible via the mobile communication device 100. In the present example, the answer in step S75 is Yes. Therefore, in step S76, the processor 10 updates the user accessibility information stored in memory 12. In step S77, the processor controls the output of a signal indicating the status of the user accessibility information to the tracking and recording system 201.

When the answer in step S71 is No, step S80 is performed to determine whether the time previously set in the timer 20 has run out. If the answer in step S80 is Yes, then step S76 is performed to update the status of the user accessibility information to indicate an offline state representing that the user is no longer accessible. If the answer in step S80 is No, then the process returns to step S71. When the answer in step S72 is No, it is determined that some other event has been detected in step S79, such as an accessibility attempt event, and processing for the particular event begins. The other events are discussed in Figs. 5-8. When the answer in step S75 is No, indicating no change in the user accessibility information, processing may proceed to step S78. In step S78, the status of the user accessibility information may be periodically output to the tracking and recording system 201. The periodic output of this information lets the tracking and recording system 201 know that the user is still accessible via the mobile communication device.

Similarly, the processes shown in Figs. 5, 7 and 8 may include the step of outputting a signal to the tracking and recording system 201 to indicate an unsuccessful access attempt or an update in user accessibility information.

When the status of the user accessibility information is communicated to the tracking and recording system 201, other users connected to the network would be aware of the user accessibility of the particular mobile communication device because the tracking and recording system 201 has recorded the user accessibility information. For example, the tracking and recording system 201 may include an instant messaging server to provide instant messaging between client devices on the network. Therefore, the mobile communication device according to the present invention may be employed to facilitate real-time or substantially real-time communication with other devices connected to the network 200.

The user accessibility information may be arranged to conform to a state currently employed in the tracking and recording system 201. For example, instant messaging systems currently utilize presence information to indicate the status of users connected to the network via client devices. The presence information usually includes states such as online, offline, busy, out to lunch, etc. The user accessibility information may be arranged according to the states employed by the system 201.

According to the present invention, an additional state may be added to the system 201 to indicate a specific state for users of mobile communication devices. For example, the state may indicate that the user is online and mobile, which means that the user can be reached via the mobile communication device. In order for the users on the network to experience the richness of this information, the software of the server as well as the software of all of the clients would require updating to recognize the new state.

In order to reduce network traffic, the timer 20 may be included in the tracking and recording system 20, rather than in the mobile communication device 100. In this arrangement, the tracking and recording system 20 would determine when to update the status of a particular mobile communication device to an offline status when no signal has been received from the particular device during the time interval of the timer.

While particular embodiments of the invention have been shown and described, it is recognized that various modifications thereof will occur to those skilled in the art without departing from the spirit and scope of the invention. The described embodiments are to be considered in all respects only as illustrative and not restrictive. Therefore, the scope of the herein-described invention shall be limited solely by the claims appended hereto.

## Claims

1. A method of detecting accessibility of a user on a client application on a mobile communication device, comprising:
activating the mobile communication device; and
detecting a signal output by a sensor of the mobile communication device, wherein the signal indicates that the user is accessible on the client application via the mobile communication device.

2. The method according to claim 1, further comprising:
updating user accessibility information stored in the mobile communication device based upon the signal output by the sensor.

3. The method according to claim 2, wherein the step of updating the user accessibility information comprises:
comparing the signal output from the sensor with a predetermined threshold; and
updating the user accessibility information when the signal output from the sensor exceeds the predetermined threshold.

4. The method according to claim 2, further comprising:
outputting an update signal from the mobile communication device to a tracking system that tracks and records user accessibility of members of the tracking system.

5. The method according to claim 1, further comprising:
setting a timer, arranged in the mobile communication device, for a predetermined period of time when the signal output from the sensor is detected; and
determining that the user is offline when the predetermined period of time elapses signal without receipt of another signal from the sensor.

6. The method according to claim 1, wherein the sensor includes a motion sensor and wherein the determining step comprises:
detecting movement of the mobile communication device when the signal is output by the motion sensor.

7. The method according to claim 6, wherein the movement detecting step comprises:
comparing the signal output from the motion sensor with a predetermined threshold value; and
determining that the user is accessible on the client application via the mobile communication device when the signal output from the motion sensor exceeds the predetermined threshold value.

8. The method according to claim 4, wherein the tracking system comprises an instant messaging server, and wherein the outputting step comprises outputting the update signal to the instant messaging server.

9. The method according to claim 1, further comprising:
detecting an access attempt to the mobile communication device;
reading the user accessibility information;
accepting the access attempt when the user accessibility information indicates that the user is accessible; and
updating the user accessibility information when the access attempt is accepted.

10. The method according to claim 9, further comprising:
inputting user preference data via an input device arranged on the mobile communication device;
wherein the user accessibility determining step comprises reading the user preference data input by the user and determining the user accessibility based up on the user preference data stored in the mobile communication device.

11. The method according to claim 9, wherein the accepting step comprises denying the access attempt when the user preference data indicates that the user does not want to be disturbed.

12. The method according to claim 11, further comprising:
determining whether the user preference data includes alternate contact information; and
outputting the alternate contact information when the access attempt is denied.

13. A computer-readable medium having computer-executable instructions for performing the steps comprising:
activating a mobile communication device; and
detecting a signal output by a sensor of the mobile communication device, wherein the signal indicates that the user is accessible on the client application via the mobile communication device.

14. The computer-readable medium according to claim 13, having further computer-executable instructions for performing the steps comprising:
updating user accessibility information stored in the mobile communication device based upon the signal output by the sensor.

15. The computer-readable medium according to claim 14, having further computer-executable instructions for performing the step of updating the user accessibility information comprising:
comparing the signal output from the sensor with a predetermined threshold; and
updating the user accessibility information when the signal output from the sensor exceeds the predetermined threshold.

16. The computer-readable medium according to claim 13, having further computer-executable instructions for performing the steps comprising:
outputting an update signal from the mobile communication device to a tracking system that tracks and records user accessibility of members of the tracking system.

17. The computer-readable medium according to claim 13, having further computer-executable instructions for performing the steps comprising:
setting a timer, arranged in the mobile communication device, for a predetermined period of time when the signal output from the sensor is detected; and
determining that the user is offline when the predetermined period of time elapses signal without receipt of another signal from the sensor.

18. The computer-readable medium according to claim 13, wherein the sensor includes a motion sensor and having further computer-executable instructions for performing the determining step comprising:
detecting movement of the mobile communication device when the signal is output by the motion sensor.

19. The computer-readable medium according to claim 18, having further computer-executable instructions for performing the movement detecting step comprising:
comparing the signal output from the motion sensor with a predetermined threshold value; and
determining that the user is accessible on the client application via the mobile communication device when the signal output from the motion sensor exceeds the predetermined threshold value.

20. The computer-readable medium according to claim 16, wherein the tracking system comprises an instant messaging server, and having further computer-executable instructions for performing the outputting step comprising outputting the update signal to the instant messaging server.

21. The computer-readable medium according to claim 13, having further computer-executable instructions for performing the steps comprising:
detecting an access attempt to the mobile communication device;
reading the user accessibility information;
accepting the access attempt when the user accessibility information indicates that the user is accessible; and
updating the user accessibility information when the access attempt is accepted.

22. The computer-readable medium according to claim 21, having further computer-executable instructions for performing the steps comprising:
inputting user preference data via an input device arranged on the mobile communication device;
wherein the user accessibility determining step comprises reading the user preference data input by the user and determining the user accessibility based up on the user preference data stored in the mobile communication device.

23. A mobile communication device, comprising:
at least one sensor for detecting when a user is accessible on a client application of the mobile communication device and for outputting a detection signal;
a transceiver for transmitting and receiving signals to and from the mobile communication device; and
a central processing unit for receiving the detection signal and for controlling the transceiver.

24. The mobile communication device according to claim 23, wherein the sensor comprises an accelerometer for detecting motion of the mobile communication device.

25. The mobile communication device according to claim 24, wherein the central processing unit is arranged to compare the detection signal output by the accelerometer with a predetermined threshold value; and
wherein the central processing unit determines that the user is in possession of the mobile communication device when the detection signal exceeds the predetermined threshold value.

26. The mobile communication device according to claim 23, wherein the sensor is a capacitive sensor.

27. The mobile communication device according to claim 23, wherein the sensor comprises a proximity sensor.

28. The apparatus according to claim 27, wherein the proximity sensor comprises an infrared sensor.

29. A hand-held mobile communication device, comprising:
at least one sensor for detecting when a user is accessible on a client application of the hand-held mobile communication device and for outputting a detection signal;
a transceiver for transmitting and receiving signals to and from the hand-held mobile communication device; and
a central processing unit for receiving the detection signal and for controlling the transceiver.

30. The hand-held mobile communication device according to claim 29, wherein the sensor comprises an accelerometer for detecting motion of the hand-held mobile communication device.

31. The hand-held mobile communication device according to claim 30,
wherein the central processing unit is arranged to compare the detection signal output by the accelerometer with a predetermined threshold value; and
wherein the central processing unit determines that the user is in possession of the hand-held mobile communication device when the detection signal exceeds the predetermined threshold value.
